# EUROPÄISCHE PATENTSCHRIFT

(11) **EP 2 155 346 B1**
(45) Veröffentlichungstag und Bekanntmachung des Hinweises auf die Patenterteilung: **05.12.2012**
(21) Anmeldenummer: 08717742.4
(22) Anmeldetag: 13.03.2008
(51) Int. Cl.: B01D 1/18, C11D 3/00, C11D 11/02, C11D 11/00, B01J 2/04

(54) **HERSTELLUNGSVERFAHREN FÜR KÖRNIGE SCHAUMREGULIERUNGSMITTEL**
METHOD FOR PRODUCING GRANULAR FOAM CONTROL AGENTS
PROCEDE POUR LA PREPARATION DES AGENTS GRANULEUX DE RÉGULATION DE LA FORMATION DE MOUSSE

(30) Priorität: 01.06.2007 DE 102007025875
(43) Veröffentlichungstag der Anmeldung: 24.02.2010
(73) Patentinhaber: Henkel AG & Co. KGaA, 40589 Düsseldorf (DE)
(72) Erfinder: POGODINA, Olga, A-1150 Wien (AT); SIMOVA, Anna, 92101 Piestany (SK); PFEIFER, Franz, A-1220 Wien (AT); REINGRUBER, Daniel, A-3874 Haugschlag (AT); FUHRMANN, Thomas, A-3004 Reichsberg (AT); SIGL, Georg, A-1030 Wien (AT); WEBER, Wolfgang, 42719 Solingen (DE)
(86) Internationale Anmeldenummer: PCT/EP2008/052998
(87) Internationale Veröffentlichungsnummer: WO 2008/145423

(56) Entgegenhaltungen:
- EP-A- 1 090 979
- WO-A-97/34983
- DE-A1- 4 234 376

## Beschreibung

Die vorliegende Erfindung betrifft ein Sprühtrocknungsverfahren zur Herstellung körniger, rieselfähiger Schaumregulierungsmittel, bei dem ein Trägermaterial und Entschäumergemisch enthaltender wäßriger Slurry unter Einsatz von überhitztem Wasserdampf getrocknet wird.

Der Gebrauch von Schaumregulierungsmitteln als Zusatz zu schäumenden Flüssigkeiten dient dazu, deren Schaumbildung zu kontrollieren, zu vermindern oder sogar, wenn das erforderlich ist, ganz zu verhindern. Der Einsatz von Schaumregulierungsmitteln ist daher sowohl im Haushalt, insbesondere im Zusammenhang mit maschinellen Geschirrspülmitteln und Waschmitteln als auch in der Industrie, dort insbesondere bei der Herstellung von Papier, bei der Lebensmittelverarbeitung sowie bei Fermentationsprozessen sehr weit verbreitet.

Die Wirkung von Schaumregulierungsmitteln kann z.B. darauf beruhen, daß sie an der Grenzfläche flüssig zu gasförmig einen geschlossenen Film bilden und dadurch dem schäumenden Medium ermöglichen, unter Zerstörung der Schaumbläschen die kleinste Oberfläche und damit den energieärmsten Zustand auszubilden. Gebildete Schaumblasen sind also nicht mehr stabil und platzen.

Schaumregulierungsmittel werden verbreitet in Wasch- oder Reinigungsmitteln eingesetzt, da viele Tenside ein ausgeprägtes Schaumvermögen zeigen. Da aber das Vorhandensein von Schaum vom Verbraucher im allgemeinen als Voraussetzung für ein gutes Waschergebnis angesehen wird, führen geeignete Schaumregulierungsmittel in Wasch- oder Reinigungsmitteln in der Regel nicht zu einer völligen Entschäumung, sondern nur zu einer Schauminhibierung.

Eine besonders gute schauminhibierende Wirkung gegenüber vielen Tensiden zeigen beispielsweise Siliconöle oder Paraffinöle. Solche Öle können aber nicht ohne weiteres in festen Wasch- und Reinigungsmitteln eingesetzt werden. Sie müssen erst in feste Schaumregulierungsmittel umgearbeitet werden. Eine Schwäche der gängigen festen Schaumregulierungsmittel liegt darin, daß sie nach längerer Lagerung einen deutlichen Abfall in ihrem Schaumregulierungsvermögen erleiden.

Die Aufgabe der vorliegenden Erfindung war es deshalb, die Bereitstellung fester Schaumregulierungsmittel zu ermöglichen, welche für die Anwendung in Wasch- und Reinigungsmitteln geeignet sind, und welche auch nach längerer Lagerung noch ein hohes Schaumregulierungsvermögen aufweisen.

Der Gegenstand der Erfindung ist ein Verfahren zur Herstellung körniger, rieselfahlger Schaumregulierungsmittel, bei dem man einen wäßrigen Slurry, enthaltend Trägermaterial und Entschaumergemisch, sprühtrocknet, dadurch gekennzeichnet, daß die Sprühtrocknung unter Einsatz von überhitztem Wasserdampf als Trocknungsgas erfolgt, wobei
a) die Sturry-Temparatur 85-95°C,
b) die Dampf-Temperatur Im Ringkanal 250-270°C,
c) die Produkt-Austritts-Temperatur 125-135°C,
beträgt,
wobei das im Slurry enthaltene Entschäumergemisch Paraffinwachs, Bisamide und Silikonöl enthält, wobei
(a) das Paraffinwachs vorzugsweise in Mengen von 70 Gew.-% bis 95 Gew.-%
(b) das Bisamid vorzugsweise in Mengen von 5 Gew.-% bis 30 Gew.-%,
(c) das Silikonöl in Mengen von 0.1 Gew.-% bis 30 Gew.-%,
enthalten ist, G9W.-% jeweils bezogen auf das gesamte Entschäumergemisch,
und wobei das Trägermaterial Alkalicarbonat Alkalisilikat Natriumluminiumsilicat und/oder Alkalisulfat enthält, dabei
- 40 Gew.-% bis zu 99 Gew.-% Alkalicarbonat, insbesondere Natriumcarbonat, bis zu 35 Gew.-% Gew.-%, insbesondere von 0,5 Gew.-% bis 30 Gew.-% Alkalisilikat, insbesondere Natriumsilikat und
- 0,5 Gew.-% bis zu 40 Gew.-% Alkalisulfat, vorteilhafterweise Natriumsulfat, enthält,
Gew.-% bezogen auf das gesamte Trägermaterial.

Dieses Verfahren ermöglicht die Bereitstellung körniger, rieselfähiger Schaumregulierungsmittel mit sehr guter Entschäumerleistung. Besonders vorteilhaft ist, daß die Entschäumerleistung im Vergleich zu herkömmlichen granularen Schaumregulierungsmitteln über einen längeren Zeitraum erhalten bleibt. Denn die erfindungsgemäß herstellbaren Schaumregulierungsmittel zeigen auch nach längerer Lagerung immer noch eine sehr gute Entschäumerleistung, während herkömmliche granulare Schaumregulierungsmittel nach längerer Lagerung einen deutlichen Leistungsabfall bei der Entschäumerleistung aufweisen. Die erfindungsgemäßen körnigen, rieselfähigen Schaumregulierungsmittel zeigen also eine hervorragende Lagerstabilität, welche mit konstant hohen Entschäumeleistungen einhergeht.

Dies ist um so überraschender, da das bei dem Verfahren resultierende körnige, rieselfähige Schaumregulierungsmittel relativ feinteilig ist und man bisher grundsätzlich davon ausgegangen war, daß grobkömigere Schaumregulierungsmittel lagerstabiler wären als feinteiligere. Besonders vorteilhaft ist, daß trotz der Feinteiligkeit sehr hohe Wirkstoffkonzentrationen in den körnigen Schaumregulierungsmitteln realisiert werden können. Daß das resultierende Korn relativ feinteilig ist, ist ein weiterer Vorteil, da es so in entsprechende Waschmittelmatrices eingearbeitet werden kann, ohne Entmischungserscheinungen hinnehmen zu müssen.

Ein weiterer Vorteil des erfindungsgemäßen Verfahrens liegt darin, daß das resultierende körnige, rieselfähige Schaumregulierungsmittel trotz seiner Feinteiligkeit im wesentlichen frei von Unterkorn ist, also im wesentlichen keine mehlartigen oder staubartigen Anteile enthält, so daß ein Nachbereitungsschritt zur Abtrennung von Unterkorn überflüssig ist

Das resultierende Korn, welches sehr gut rieselfähig ist, zeichnet sich überdies durch eine sehr gute Komstabilität im Sinne eine sehr guten Abriebsstabilität aus, wobei es dennoch eine hohe Auflösungsgeschwindigkeit in Wasser aufweist.

Die genannten Verfahrensbedingungen ermöglichen außerdem einen Betrieb des Sprühturms ohne Ablagerungen.

Das Sprühtrocknen als solches ist an sich seit langem bekannt und betrifft im allgemeinen ein Verfahren, bei dem das zu trocknende Material (hier: Slurry) am oberen Ende eines weiten, zylindrischen Behälters, wohin der Slurry zuvor über Pumpen befördert wurde, durch Düsen oder auch mittels einer schnell rotierenden Zerstäuberscheibe zu einem feinen Nebel versprüht wird. Dem entstehenden Sprühkegel wird ein Trocknungsgas (hier: überhitzter Wasserdampf) in der Regel von unten entgegengeführt.

Um besonders schonende Bedingungen zu realisieren, kann die Zufuhr des Trocknungsgases erfindungsgemäß vorzugsweise auch im Gleichstrom von oben erfolgen. Das Trocknungsgas trocknet den Slurry und verdampft das anhaftende Wasser. Das resultierende Trockengut fällt als feines Pulver nach unten und kann am Boden des Trockners beispielsweise durch mechanische Räumer, Transportschnecken oder dergleichen ausgetragen werden. Das Sprühtrocknen des Slurries kann in dafür vorgesehenen Anlagen, so genannten Sprühtürmen erfolgen.

Der als Trocknungsgas eingesetzte überhitzte Wasserdampf wird erfindungsgemäß vorzugsweise im Kreislauf geführt und vorzugsweise außerhalb der Trocknungszone erhitzt. Dabei wird der überhitzte Wasserdampf als Trocknungsgas insbesondere nach Ausschleusen des verdampften Wasseranteiles im Kreislauf in die Trocknungsstufe zurückgeführt wird. Grundsätzlich gilt für diese Überlegungen, daß im geschlossenen System mit einem Wasserdampfkreislaufstrom gearbeitet wird, dem der verdampfte Wasseranteil des Trocknungsgutes entzogen wird. Der benötigte Energiebetrag kann dem Dampfkreislaufstrom vorzugsweise durch indirekten Wärmeaustausch zugeführt wird. Es ist bevorzugt, den Energieeintrag zur Zuführung der Verdampfungsenergie in den Dampfkreislauf wenigstens überwiegend außerhalb der Trocknungszone vorzunehmen.

In einer bevorzugten Ausführungsform der Erfindung zeichnet sich das erfindungsgemäße Verfahren dadurch aus, daß mit Innendrucken des dampferfüllten Systems im Bereich des Normaldrucks, aber dabei vorzugsweise mit derart angehobenen Drucken gearbeitet wird, so daß Lufteinbrüche - beispielsweise an Schadstellen - in das System verhindert werden, wobei Überdrücke unterhalb etwa 50 mbar bevorzugt sind.

Diese Arbeitsbedingungen ermöglichen einen zuverlässigen Ausschluß von Schadstoffen -wie insbesondere Sauerstoff und Kohlendioxid - im Trocknungsgas (überhitzter Wasserdampf), so daß z.B. unerwünschte Oxidationsprozesse unterbunden sind.

Geeignete Arbeitsdrucke liegen beispielsweise im Bereich bis etwa 150 cm Wassersäule, zweckmäßig bis etwa 75 cm Wassersäule und vorzugsweise unterhalb 50 cm Wassersäule. Der Bereich von etwa 5 bis 15 cm Wassersäule System-Innendruck kann besonders bevorzugt sein. Die erfindungsgemäße Trocknung mit überhitztem Wasserdampf ist prinzipiell natürlich auch bei Unterdrucken, insbesondere im Bereich mäßiger Unterdrucke, möglich, erfordert dann aber einen erhöhten technischen Aufwand zur Sicherstellung des Ausschlusses möglicher Schadstellen im Kreistaufsystem, durch die unerwünschte Lufteinbrüche ausgelöst würden.

Das im Slurry enthaltene Trägermaterial umfaßt insbesondere anorganisches Trägermaterial, beispielsweise Alkalicarbonat, Alkaliborat, Alkalialumosilikat und/oder Alkalisulfat, z.B. mit Zusätzen von Alkalisilikat, wobei letzteres zu noch weiter verbesserten Kornstabilitäten der erfindungsgemäß resultierenden Mittel beitragen kann. Bei dem vorzugsweise einsetzbaren Alkalisilikat kann es sich vorteilhafterweise um eine Verbindung mit einem Molverhältnis Alkalioxid zu SiO₂ von 1:1,5 bis 1:3,5 halten. Solche Silikate können insbesondere mit Blick auf eine noch weiter verbesserte Abriebsstabilität der erfindungsgemäß resultierenden Mittel beitragen, wobei dennoch eine gewünscht hohe Auflösungsgeschwindigkeit in Wasser erhalten bleibt. Das einsetzbare anorganische Trägermaterial kann insbesondere Zeolithe und Schichtsilikate umfassen, beispielsweise Bentonit. Insbesondere Zeolith A, Zeolith P und Zeolith X sind mit Vorteil einsetzbar.

Das bei dem erfindungsgemäßen Verfahren eingesetzte Trägermaterial enthält Alkalicarbonat, Alkalisilikat. Natriumaluminiumsilicat und/oder Alkalisulfat enthält, dabei
- 40 Gew.-% bis 99 Gew.-% Alkalicarbonat, insbesondere Natriumcarbonat,
- bis zu 35 Gew.-% Gew.%, insbesondere von 0,5 Gew.-% bis 30 Gew.-% Alkalisilikat, insbesondere Natriumsilikat und
- 0,5 Gew.-% bis 40 Gew.-% Alkalisulfat, vorteilhafterweise Natriumsulfat,
Gew.% bezogen auf das gesamte Trägermaterial.

Enthält das im erfindungsgemäßen Verfahren eingesetzte Trägermaterial organische Substanzen, insbesondere Acetate, Tartrate, Succinate, Citrate, Carboxymethylsuccinate, Alkalisalze von Aminopolycarbonsäuren, Hydroxyalkan-phosphonate, Aminoalkanpolyphosphonate, wasserlösliche Salze von polymeren beziehungsweise copolymeren Carbonsäuren, Stärke, Stärkehydrolysate und/oder deren Gemische, so liegt wiederum eine bevorzugte Ausführungsform der Erfindung vor.

Besonders vorteilhafte Beispiele für erfindungsgemäß einsetzbare wasserlösliche Salze von polymeren beziehungsweise copolymeren Carbonsäuren sind Mischpolymerisate aus Acrylsäure und Maleinsäure sowie z.B. auch Polycarbonsäuren, die man durch Oxidation von Polysacchariden erhält. Bevorzugtes Alkalimetall in den genannten Alkalisalzen ist in allen Fällen Natrium.

Auch Gemische aus anorganischen und organischen Salzen können mit Vorteil verwendet werden.

Das im erfindungsgemäßen Verfahren eingesetzte Trägermaterial kann darüber hinaus auch filmbildende Polymere, beispielsweise Polyethylenglykole, Polyvinalalkohole, Polyvinylpyrrolidone, Polyacrylate und Cellulosederivate enthalten. Zu den besonders brauchbaren Cellulosederivaten gehören Celluloseether, insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Vorzugsweise können Mischungen aus Natrium-Carboxymethylcellulose und Methylcellulose eingesetzt werden, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweisen können. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können. Derartige filmbildende Polymere können in dem Trägermaterial enthalten sein, vorzugsweise aber nicht in Mengen von über 5 Gew.-%, vorteilhafterweise in Mengen von 0,5 Gew.-% bis 2 Gew.-%, bezogen auf das gesamte einzusetzende Trägermaterial.

Das im Slurry enthaltene Entschäumergemisch enthält Paraffinwachs, Bisamide und Silikonöl, wobei
(a) das Paraffinwachs vorzugsweise in Mengen von 70 Gew.-% bis 95 Gew.-%
(b) das Bisamid vorzugsweise in Mengen von 5 Gew.-% bis 30 Gew.-%.
(c) das Silikonöl in Mengen von 0,1 Gew.-% bis 30 Gew.-%,
enthalten ist, Gew.-% jeweils bezogen auf das gesamte Entschäumergemisch.

Sinnvolle Obergrenzen für das im Entschäumergemisch vorteilhafterweise enthaltene Bisamid können auch bei Werten von 25 Gew.-%, 20 Gew.-% oder 15 Gew.% liegen, Gew.-% bezogen auf das gesamte Entschäumergemisch. Sinnvolle Untergrenzen für das im Entschäumergemisch vorteilhafterweise enthaltene Bisamid können auch bei Werten von 10 Gew.-%, 15 Gew.-% oder 20 Gew.-% liegen, Gew.-% bezogen auf das gesamte Entschäumergemisch.

Sinnvolle Obergrenzen für das im Entschäumergemisch vorteilhafterweise enthaltene Silikonöl können auch bei Werten von 25 Gew.-%, 20 Gew.-%, 15 Gew.-%, 10 Gew.-% oder 5 Gew.-% liegen, Gew.-% bezogen auf das gesamte Entschäumergemisch. Sinnvolle Untergrenzen für das im Entschäumergemisch vorteilhafterweise enthaltene Silikonöl können auch bei Werten von 1 Gew.-% oder 5
Gew.-% liegen, Gew.-% bezogen auf das gesamte Entschäumergemisch.

Das im erfindungsgemäß hergestellten Entschäumergemisch vorzugsweise enthaltene Paraffinwachs stellt im allgemeinen ein komplexes Stoffgemisch ohne scharfen Schmelzpunkt dar. Zur Charakterisierung bestimmt man üblicherweise seinen Schmetzbereich durch Differential-Thermo-Analyse (DTA), wie in The Analyst" 87 (1962), 420, beschrieben, und/oder seinen Erstarrungspunkt. Darunter versteht man die Temperatur, bei der das Wachs durch langsames Abkühlen aus dem flüssigen in den festen Zustand übergeht. Paraffine mit weniger als 17 C-Atomen sind erfindungsgemäß unvorteilhaft, ihr Anteil im Paraffinwachsgemisch sollte daher so gering wie möglich sein und liegt vorzugsweise unterhalb der mit üblichen analytischen Methoden, zum Beispiel Gaschromatographie, signifikant meßbaren Grenze. Vorzugsweise werden Wachse verwendet, die im Bereich von 20 °C bis 70 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß besonders brauchbaren Paraffinwachsen liegt der Flüssiganteil bei 40 °C möglichst hoch, ohne bei dieser Temperatur schon 100 % zu betragen. Besonders bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf. Dies hat zur Folge, daß die Paraffine bei Temperaturen bis hinunter zu mindestens 70 °C, vorzugsweise bis hinunter zu mindestens 60 °C fließfähig und pumpbar sind. Außerdem sollten die Paraffine möglichst keine flüchtigen Anteile enthalten. Bevorzugte Paraffinwachse enthalten weniger als 1 Gew.%, insbesondere weniger als 0,5 Gew.% bei 110 °C und Normaldruck verdampfbare Anteile. Erfindungsgemäß brauchbare Paraffinwachse können beispielsweise unter den Handelsbezeichnungen Lunaflex® der Firma Fuller sowie Deawax® der DEA Mineralöl AG bezogen werden.

Das erfindungsgemäß im Slurry enthaltene Entschäumergemisch enthält vorzugsweise Bisamid. Bevorzugt einsetzbare Bisamide leiten sich von gesättigten Fettsäuren mit 12 bis 22, vorzugsweise 14 bis 18 C-Atomen sowie von Alkylendiaminen mit vorzugsweise 2 bis 7 C-Atomen ab. Besonders geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Besonders geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bispalmitoyl-ethylendiamin, Bis-stearoyl-ethylendiamin und deren Gemische sowie die entsprechenden Derivate des Hexamethylendiamins.

Die bevorzugt einsetzbaren Bisamide liegen vorzugsweise in feinverteilter Form vor und weisen insbesondere eine mittlere Korngröße von weniger als 50 µm auf. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter".

Das erfindungsgemäß einsetzbare Entschäumergemisch kann auch andere Entschäumerwirkstoffe, insbesondere Abmischungen der Silikonöle mit hydrophobierter Kieselsäure, enthalten.

In einer weiteren bevorzugten Ausführungsform der Erfindung zeichnet sich ein erfindungsgemäßes Verfahren dadurch aus, daß man
(a) das Trägermaterial in Wasser löst beziehungsweise aufschlämmt,
(b) das Entschäumergemisch darin dispergiert und den resultierenden Slurry sprühtrocknet, wobei die Herstellung des Entschäumergemisches so erfolgt, daß man in eine Schmelze des
Paraffinwachses das feinteilige Bisamid und das Silikonöl einträgt und durch intensives Vermischen darin homogenisiert, wobei die Schmelze vorzugsweise eine Temperatur im Bereich von 130-150°C aufweist.

Besonders vorteilhaft für eine gute Wirksamkeit des Entschäumers ist das Vorliegen einer stabilen Dispersion der Bisamid-Teilchen in der Paraffinmatrix, was insbesondere durch den Einsatz von Bisamid mit der zuvor schon genannten Korngröße bewirkt werden kann. Zur Erzielung einer besonders stabilen Dispersionszustandes kann man daher ein Bisamid einsetzen und dispergieren, das von vornherein die entsprechende, vorgenannte Teilchengröße aufweist, oder man verwendet ein grobteiligeres Ausgangsmaterial und unterwirft die Schmelze einer intensiven Rührbehandlung oder einer Mahlbehandlung mittels Kolloidmühlen, Zahnmühlen oder Kugelmühlen, bis die erwünschte Teilchengröße erreicht ist. Auch ein vollständiges Aufschmelzen der Bisamide in der Paraffinschmelze und anschließendes schnelles Abkühlen auf Temperaturen unterhalb des Erstarrungspunktes der Bisamide unter gleichzeitigem Homogenisieren der Schmelze kann zu einer entsprechend feinen Kornverteilung der Bisamide führen.

Die erfindungsgemäß zu sprühtrocknenden Slurries und damit die resultierenden körnigen Schaumregulierungsmittel sind vorzugsweise frei von emulgierend beziehungsweise dispergierend wirkenden Tensiden. Unter Tensiden sind oberflächenaktive Verbindungen mit hydrophobem Molekülteil und hydrophilen anionischen, ampholytischen, zwitterionischen, kationischen und nichtionischen Gruppen zu verstehen, die in wäßriger Lösung oder Dispersion eine reinigende beziehungsweise emulgierende Wirkung entfalten. Der hydrophobe Molekülteil besteht im allgemeinen aus einem Kohlenwasserstoffrest beziehungsweise einem substituierten Kohlenwasserstoffrest oder einem in Wasser schwer löslichen Polyglykoletherrest, zum Beispiel einem Polypropylenglykol- bzw. Polybutylenglykol-Etherrest. Verbindungen mit nichtpolarem Molekülaufbau, insbesondere die genannten filmbildenden Polymere, die unter bestimmten Voraussetzungen in Wasser ebenfalls eine Dispergierwirkung entfalten können, fallen nicht unter die Definition "Tenside" und können in den erfindungsgemäßen Mitteln enthalten sein.

Der erfindungsgemäß verwendete Slurry, welcher der Sprühtrocknung unter Einsatz von überhitztem Wasserdampf unterworfen wird, kann vorzugsweise einen wasserlöslichen, nichttensidischen Dispersionsstabilisator in Form eines in Wasser quellfähigen Polymeren enthalten. Dies ist vorteilhaft, um die Löslichkeit der Komponenten des Entschäumergemisches im wäßrigen Slurry zu verbessern, falls dies erforderlich ist. Als Dispersionsstabilisator besonders geeignet sind z.B. die bereits genannten Celluloseether, Homo- und Copolymere von ungesättigten Carbonsäuren, wie Acrylsäure, Maleinsäure und copolymerisierbaren Vinylverbindungen, wie Vinylether, Acrylamid und Ethylen. Der optionale Anteil an derartigen als Dispersionsstabilisatoren wirkenden Verbindungen in dem Slurry beträgt vorzugsweise nicht über 5 Gew.%, insbesondere 1 Gew.-% bis 3 Gew.-%, bezogen auf den Slurry. Der Wassergehalt des Slurries kann je nach Art beziehungsweise Löslichkeit des Trägersalzes variieren, vorzugsweise kann er 20 Gew.% bis 70 Gew.%, insbesondere 30 Gew.-% bis 60 Gew.-% betragen.

Wird der Trocknungsschritt mit dem überhitzten Wasserdampf bei Restwassergehalten im Bereich von etwa 0.5 bis 20 Gew.-%, vorzugsweise im Bereich von etwa 1 bis 12 Gew.-%, abgebrochen und dabei insbesondere der Gehalt an freiem, nicht als Kristattwasser-gebundenen Wasser auf Werte von höchstens etwa 10 Gew.% begrenzt - Gew.-% jeweils bezogen auf das Gewicht des aus der Trocknungszone entnommenen körnigen Schaumregulierungsmittel, so liegt ebenfalls eine bevorzugte Ausführungsform der Erfindung vor. Eine Nachtrocknung der resultierenden Körner ist im allgemeinen nicht erforderlich.

Das körnige Schaumregulierungsmittel weist vorzugsweise eine solche mittlere Korngröße auf, daß nicht mehr als 20 Gew.-%, insbesondere nicht mehr als 5 Gew.-% der Partikel mit einer Korngröße über 1.6 mm, und nicht mehr als 20 Gew.%, insbesondere nicht mehr als 5 Gew.% der Partikel mit einer Korngröße unter 0,1 mm vorliegen. Die mittlere Korngröße liegt insbesondere im Bereich von 0,1 mm bis 0,5 mm.

Vorzugsweise wird das erfindungsgemäß hergestellte körnige Schaumregulierungsmittel zur Herstellung von teilchenförmigen Wasch- oder Reinigungsmitteln verwendet, wobei als weiterer Vorteil des erfindungsgemäßen Schaumregulierungsmittels seine geringe Einsatzmenge bei guter Entschäumerleistung anzumerken ist.

Die erfindungsgemäß hergestellten körnigen Schaumregulierungsmittel zeigen sowohl bei der heute immer unüblicher werdenden Hochtemperaturwäsche bei etwa 90 °C als auch im Niedrigtemperaturbereich und im mittleren Temperaturbereich sowie während der anfänglichen Aufheizphase der Mittel- und Hochtemperaturwäsche ein ganz hervorragendes Schaumregulierungsvermögen, welches selbst noch nach längerer Lagerung der körnigen Schaumregulierungsmittel beobachtet werden kann.

Das erfindungsgemäß hergestellte körnige Schaumregulierungsmittel weist vorzugsweise ein Schüttgewicht von 500-1000 g/L, insbesonders vorzugsweise 600-800 g/L auf, so liegt eine bevorzugte Ausführungsform der Erfindung vor.

Besonders bevorzugte erfindungsgemäß hergestellte körnige Schaumregulierungsmittel enthalten
(a) > 60 Gew.-%, vorzugsweise > 70 Gew.-%, insbesondere > 80 Gew.-% Trägermaterial, vorteilhafterweise umfassend filmbildende Polymere, wie z.B. Carboxymethylcellulose, anorganisches Trägermaterial, wie beispielsweise Alkalicarbonat, Alkalisulfat, Alkalisilicat, organische Substanzen, wie z.B., wasserlösliche Salze von polymeren beziehungsweise copolymeren Carbonsäuren,
(b) 1-40 Gew.-%, vorzugsweise 5-30 Gew.-%, vorteilhafterweise 10-25 Gew.-%, insbesondere 15-20 Gew.-% Entschäumer, vorteilhafterweise umfassend Paraffinwachs, Bisamide und/oder Silikonöl.

Eine bevorzugte Ausführungsform der Erfindung liegt ebenfalls vor, wenn der Gehalt an freiem, nicht als Kristallwasser-gebundenen Wasser < 10 Gew.%, vorzugsweise < 5 Gew.%, insbesondere < 2 Gew.-% ist, bezogen auf das gesamte Schaumregulierungsmittel.

Wasch- oder Reinigungsmittel, welche ein körniges Schaumregulierungsmittel enthalten welches nach einem nach einem der zuvor beschriebenen erfindungsgemäßen Verfahren hergestellt wurde, enthalten bevorzugt das Schaumregulierungsmittel in Mengen von 0,1-5 Gew.%, vorzugsweise 0,2-3 Gew.-%, insbesondere 0,5-2 Gew.-% Gew.-% bezogen auf das gesamte Wasch- oder Reinigungsmittel.

Ein pulverförmiges Wasch- oder Reinigungsmittel kann neben dem erfindungsgemäß hergestellten körnigen Schaumregulierungsmittel vorzugsweise weitere Komponenten enthalten, die insbesondere ausgewählt sind aus den folgenden:
- Aniontenside, wie vorzugsweise Alkylbenzolsulfonate, Alkansulfonate, Methylestersulfonate, α-Olefinsulfonate, Alkylsulfate und/oder Alkylethersulfate, in Mengen von vorteilhafterweise > 0,1 Gew.-%, vorzugsweise 5-30 Gew.-%, weiter vorteilhaft 8-25 Gew.-%, insbesondere 15-20 Gew.%,
- Nichtionische Tenside, wie vorzugsweise Fettalkoholpolyglycolether (Fettalkoholethoxylate), Alkylphenolpolyglycolether, Fettsäureethoxylate, Fettaminethoxylate, ethoxylierte Triglyceride und Mischether (beidseitig alkylierte Polyethylenglycolether), Alkylpolyglucoside, Saccharoseester, Sorbitanester, Fettsäureglucamide und/oder Aminoxide, vorteilhafterweise in Mengen von 0,1-20 Gew.-%, vorzugsweise 2-15 Gew.-%, insbesondere 6-11 Gew.-%,
- Gerüststoffe, wie vorzugsweise Zeolith, Polycarboxylat, Natriumcitrat, Citronensäure, alkalische amorphe Disilicate und/oder kristalline Schichtsilicate, in Mengen von vorteilhafterweise > 0,1 Gew.%, weiter vorteilhaft 5-60 Gew.%, vorzugsweise 10-55 Gew.-%, insbesondere 15-40 Gew.%,
- Alkalien, wie vorzugsweise Soda, vorteilhafterweise in Mengen von > 0,1 Gew.-%, weiter vorteilhaft 1-30 Gew.-%, vorzugsweise 2-25 Gew.%, insbesondere 5-20 Gew.-%,
- Bleichmittel, wie vorzugsweise Natriumperborat und/oder Natriumpercarbonat, in Mengen von vorteilhafterweise > 0,1 Gew.%, weiter vorteilhaft 5-25 Gew.-%, vorzugsweise 10-20 Gew.-%,
- Korrosionsinhibitoren, z.B. Natriumsilicat, vorteilhafterweise in Mengen von > 0,1 Gew.-%, weiter vorteilhaft 1-6 Gew.-%, vorzugsweise 2-5 Gew.-%, insbesondere 3-4 Gew.-%,
- Stabilisatoren, z.B. Phosphonate, vorteilhafterweise in Mengen von vorteilhafterweise > 0,05 Gew.%, weiter vorteilhaft 0,1-1 Gew.-%,
- Enzyme, z.B. Proteasen, Amylasen, Mannanasen, Tannasen, Cellulasen, Lipasen, in Mengen von vorteilhafterweise > 0,05 Gew.%, weiter vorteilhaft 0,1-5 Gew.-%, vorzugsweise 0,2-2 Gew.%, insbesondere 0,3-1 Gew.-%,
- Vergrauungsinhibitor, z.B. Carboxymethylcellulose, in Mengen von vorteilhafterweise > 0,05 Gew.-%, weiter vorteilhaft 0,1-3 Gew.-%,
- Verfärbungsinhibitor, z.B. Polyvinylpyrrolidon-Derivate, vorteilhafterweise 0-2 Gew.-%,
- Stellmittel, z.B. Natriumsulfat, vorteilhafterweise 0-20 Gew.%,
- Optische Aufheller, z.B. Stilben-Derivat, Biphenyl-Derivat, vorteilhafterweise 0,01-0,6 Gew.-%, insbesondere 0,1-0,4 Gew.-%,
- Duftstoffe
- Wasser
- Seife
- Bleichaktivatoren.

Ein besonders bevorzugtes, pulverförmiges Wasch- oder Reinigungsmittel enthält einer bevorzugten Ausführungsform entsprechend neben dem erfindungsgemäßen körnigen Schaumregulierungsmittel noch folgende weitere Komponenten:
- Aniontenside, vorzugsweise Alkylbenzolsulfonate, Alkansulfonate, Methylestersulfonate, α-Olefinsulfonate, Alkylsulfate und/oder Alkylethersulfate, in Mengen von 1-35 Gew.-%
- Nichtionische Tenside, vorzugsweise Fettalkoholpolyglycolether (Fettalkoholethoxylate), Alkylphenolpolyglycolether, Fettsäureethoxylate, Fettaminethoxylate, ethoxylierte Triglyceride und Mischether (beidseitig alkylierte Polyethylenglycolether), Alkylpolyglucoside, Saccharoseester, Sorbitanester, Fettsäuregtucamide und/oder Aminoxide, in Mengen von 0,1-25 Gew.-%,
- Gerüststoffe, vorzugsweise Zeolith, Polycarboxylat, Natriumcitrat, Citronensäure und/oder alkalische amorphe Disilicate, kristalline Schichtsilicate, in Mengen von 1-50 Gew.-%,
- Alkalien, insbesondere Soda, in Mengen von 1-30 Gew.-%,
- Korrosionsinhibitoren, vorzugsweise Natriumsilicat, in Mengen von 0,01-6 Gew.-%,
- Stabilisatoren, vorzugsweise Phosphonate, in Mengen von 0,05 Gew.%-2 Gew.-%,
- Stellmittel, vorzugsweise Natriumsulfat,
- Duftstoffe.

Der Vorteil gerade des vorgenannten Wasch- und Reinigungsmittels liegt darin, daß seine Rezeptur so abgestimmt ist, daß auf der einen Seite bei der Maschinenwäsche in einer automatischen Waschmaschine noch eine ausreichende Menge an Schaum zugelassen wird, mit welcher der Verbraucher eine Reinigungsleistung assoziiert, und auf der anderen Seite die Menge an Schaum derart begrenzt ist, daß der Schaum die mechanische Bewegung in der Waschmaschine nicht mehr in einem Maße dämpfen kann, daß die Reinigungswirkung darunter leiden würde, so daß ein bestmögliches Reinigungsergebnis erzielt werden kann.

## Patentansprüche

1. Verfahren zur Herstellung körniger, rieselfähiger Schaumregulierungsmittel, bei dem man einen wäßrigen Slurry, enthaltend Trägermaterial und Entschäumergemisch, sprühtrocknet, **dadurch gekennzeichnet, daß** die Sprühtrocknung unter Einsatz von überhitztem Wasserdampf als Trocknungsgas erfolgt, wobei
a) die Slurry-Temperatur 85-95°C,
b) die Dampf-Temperatur im Ringkanal 250-270°C.
c) die Produkt-Austritts-Temperatur 125-135°C,
beträgt,
wobei das im Slurry enthaltene Entschäumergemisch Paraffinwachs, Bisamide und Silikonöl enthält, wobei
(a) das Paraffinwachs vorzugsweise in Mengen von 70 Gew.% bis 95 Gew.-%
(b) das Bisamid vorzugsweise in Mengen von 5 Gew.-% bis 30 Gew.-%,
(c) das Silikonöl in Mengen von 0,1 Gew.-% bis 30 Gew.-%,
enthalten ist, Gew.-% jeweils bezogen auf das gesamte Entschäumergemisch,
und wobei das Trägermaterial Alkalicarbonat, Alkalisilikat, Natriumaluminiumsilicat und/oder Alkalisulfat enthält, dabei
- 40 Gew.-% bis zu 99 Gew.-% Alkalicarbonat insbesondere Natriumcarbonat,
- bis zu 35 Gew.-% Gew.-%, insbesondere von 0,5 Gew.-% bis 30 Gew.-% Alkalisilikat, insbesondere Natriumsilikat und
- 0,5 Gew.-% bis zu 40 Gew.-% Alkalisulfat, vorteilhafterweise Natriumsulfat, enthält,
Gew.-% bezogen auf das gesamte Trägermaterial.

2. Verfahren nach Anspruch 1, **dadurch gekennzeichnet, daß** mit Innendrucken des dampferfüllten systems im Bereich des Normaldrucks, aber dabei vorzugsweise mit derart angehobenen Drucken gearbeitet wird, daß Lufteinbrüche - beispielsweise an Schadstellen - in das System verhindert werden, wobei Überdrücke unterhalb etwa 50 mbar bevorzugt sind.

3. Verfahren nach einem der Ansprüche 1 oder 2, **dadurch gekennzeichnet, daß** das Trägermaterial organische Substanzen, insbesondere Acetate, Tartrate, Succinate, Citrate, Carboxymethylsuccinate, Alkalisalze von Aminopolycarbonsäuren, Hydroxyalkan-phosphonate, Aminoalkanpolyphosphonate, wasserlösliche Salze von polymeren beziehungsweise copolymeren Carbonsäuren, Stärke, Stärkehydrolysate und/oder deren Gemische, enthält.

4. Verfahren nach einem der Ansprüche 1-3, **dadurch gekennzeichnet, daß** man
(a) das Trägermaterial in Wasser löst beziehungsweise aufschlämmt,
(b) das Entschäumergemisch darin dispergiert und den resultierenden Slurry sprühtrocknet, wobei die Herstellung des Entschäumergemisches so erfolgt, daß man in eine Schmelze des Paraffinwachses das feinteilige Bisamid und das Silikonöl einträgt und durch intensives Vermischen darin homogenisiert, wobei die Schmelze vorzugsweise eine Temperatur Im Bereich von 130-150°C aufweist.

5. Verfahren nach einem der Ansprüche 1-4, **dadurch gekennzeichnet, daß** man den Trocknungsschritt mit dem überhitzten Wasserdampf bei Restwassergehalten im Bereich von etwa 0,5 bis 20 Gew.-%, vorzugsweise im Bereich von etwa 1 bis 12 Gew.-%, abbricht und dabei Insbesondere den Gehalt an freiem, nicht als Kristallwasser-gebundenen Wasser auf Werte von höchstens etwa 10 Gew.-% begrenzt, Gew.-% jeweils bezogen auf das Gewicht des aus der Trocknungszone entnommenen körnigen Schaumregulierungsmittel.

## Claims

1. A method for producing granular, flowable foam-regulating agents, in which an aqueous slurry containing carrier material and defoamer mixture is spray dried, **characterised in that** spray drying proceeds using superheated steam as drying gas, wherein
a) the slurry temperature amounts to 85-95°C,
b) the steam temperature in the annular channel amounts to 250-270°C,
c) the product outlet temperature amounts to 125-135°C,
wherein the defoamer mixture present in the slurry contains paraffin wax, bisamides and silicone oil, wherein
(a) the paraffin wax is preferably present in quantities of 70 wt.% to 95 wt.%
(b) the bisamide is preferably present in quantities of 5 wt.% to 30 wt.%,
(c) the silicone oil is present in quantities of 0.1 wt.% to 30 wt.%, wt.% in each case being relative to the entire defoamer mixture,
and wherein the carrier material contains alkali metal carbonate, alkali metal silicate, sodium aluminium silicate and/or alkali metal sulfate, specifically
- 40 wt.% to 99 wt.% of alkali metal carbonate, in particular sodium carbonate,
- up to 35 wt.%, in particular from 0.5 wt.% to 30 wt.% of alkali metal silicate, in particular sodium silicate and
- 0.5 wt.% to 40 wt.% of alkali metal sulfate, advantageously sodium sulfate,
wt.% being relative to the entire carrier material.

2. A method according to claim 1, **characterised in that** it is performed at internal pressures of the steam-filled system in the region of normal pressure, but preferably at pressures which are elevated to such an extent that air ingress into the system, for example at points of damage, is prevented, wherein excess pressures of less than around 50 mbar are preferred.

3. A method according to any one of claims 1 or 2, **characterised in that** the carrier material contains organic substances, in particular acetates, tartrates, succinates, citrates, carboxymethylsuccinates, alkali metal salts of aminopolycarboxylic acids, hydroxyalkanephosphonates, aminoalkanepolyphosphonates, water-soluble salts of polymeric or copolymeric carboxylic acids, starch, starch hydrolysates and/or mixtures thereof.

4. A method according to any one of claims 1-3, **characterised in that**
(a) the carrier material is dissolved or suspended in water,
(b) the defoamer mixture is dispersed therein and the resultant slurry is spray dried, wherein the defoamer mixture is produced in such a manner that the finely divided bisamide and the silicone oil are introduced into a melt of the paraffin wax and homogenised therein by vigorous mixing, wherein the melt preferably has a temperature in the range from 130-150°C.

5. A method according to any one of claims 1-4, **characterised in that** the drying step with superheated steam is terminated at residual water contents in the range from around 0.5 to 20 wt.%, preferably in the range from around 1 to 12 wt.%, and in particular the content of free water not bound as water of crystallisation is limited to values of at most around 10 wt.%, wt.% in each case being relative to the weight of the granular foam-regulating agent obtained from the drying zone.

## Revendications

1. Procédé pour la préparation d'agents granuleux, pouvant s'écouler, de régulation de mousse, dans lequel on sèche par pulvérisation une suspension aqueuse, contenant un matériau support et un mélange d'antimousses, **caractérisé en ce que** le séchage par pulvérisation a lieu avec utilisation de vapeur d'eau surchauffée comme gaz de séchage, dans lequel
a) la température de la suspension est de 85-95°C,
b) la température de la vapeur dans le canal annulaire est de 250-270°C,
c) la température de sortie du produit est de 125-135°C,
dans lequel le mélange d'antimousses contenu dans la suspension contient de la cire de paraffine, des bisamides et de l'huile de silicone, dans lequel
(a) la cire de paraffine est de préférence contenue en des quantités de 70% en poids à 95% en poids,
(b) le bisamide est de préférence contenu en des quantités de 5% en poids à 30% en poids,
(c) l'huile de silicone est de préférence contenue en des quantités de 0,1% en poids à 30% en poids,
le pourcentage en poids se rapportant à chaque fois à la totalité du mélange d'antimousses,
et dans lequel le matériau support contient du carbonate de métal alcalin, du silicate de métal alcalin, de l'aluminosilicate de sodium et/ou un sulfate de métal alcalin, dont
- 40% en poids à 99% en poids de carbonate de métal alcalin, en particulier le carbonate de sodium
- jusqu'à 35% en poids, en particulier 0,5% en poids à 30% en poids de silicate de métal alcalin, en particulier le silicate de sodium et
- 0,5% en poids à 40% en poids de sulfate de métal alcalin, avantageusement le sulfate de sodium, le pourcentage en poids se rapportant à la totalité du matériau support.

2. Procédé selon la revendication 1, **caractérisé en ce qu'**on travaille à des pressions internes du système rempli de vapeur dans la plage de la pression normale, mais de préférence à des pressions augmentées de manière telle que des brèches d'air - par exemple en des endroits défectueux - dans le système sont empêchées, dans lequel des surpressions inférieures à environ 50 mbars sont préférées.

3. Procédé selon l'une quelconque des revendications 1 ou 2, **caractérisé en ce que** le matériau support contient des substances organiques, en particulier des acétates, des tartrates, des succinates, des citrates, des carboxyméthylsuccinates, des sels de métal alcalin d'acides aminopolycarboxyliques, des hydroxyalcanephosphonates, des aminoalcanepolyphosphonates, des sels solubles dans l'eau d'acides carboxyliques polymères ou, selon le cas, copolymères, de l'amidon, des hydrolysats d'amidon et/ou leurs mélanges.

4. Procédé selon l'une quelconque des revendications 1 à 3, **caractérisé en ce qu'**on
(a) dissout ou, selon le cas, met en suspension le matériau support dans l'eau,
(b) y disperse le mélange d'antimousses et sèche par pulvérisation la suspension résultante, dans lequel la préparation du mélange d'antimousses est réalisée de manière telle qu'on introduit le bisamide finement réparti et l'huile de silicone dans une masse fondue de la cire de paraffine et on les y homogénéise par un mélange intensif, la masse fondue présentant de préférence une température dans la plage de 130-150°C.

5. Procédé selon l'une quelconque des revendications 1 à 4, **caractérisé en ce qu'**on interrompt l'étape de séchage avec la vapeur d'eau surchauffée à des teneurs résiduelles en eau dans la plage d'environ 0,5 à 20% en poids, de préférence dans la plage d'environ 1 à 12% en poids, en limitant en particulier la teneur en eau libre, non liée comme eau de cristallisation à des valeurs d'au maximum environ 10% en poids, le pourcentage en poids se rapportant à chaque fois au poids de l'agent granuleux de régulation de la mousse prélevé de la zone de séchage.
